# DEMANDE DE BREVET EUROPEEN

(11) **EP 0 695 651 A1**
(43) Date de publication de la demande: **07.02.1996**
(21) Numéro de dépôt: 95111051.9
(22) Date de dépôt: 14.07.1995
(51) Int. Cl.: B60C 15/032, B60C 17/01

(54) **Ensemble pneumatique sans chambre à air pour véhicule deux roues comportant une structure annulaire élastique et déformable**

(30) Priorité: 29.07.1994 FR 9409777
(71) Demandeur: COMPAGNIE GENERALE DES ETABLISSEMENTS MICHELIN - MICHELIN & CIE, F-63040 Clermont-Ferrand Cédex (FR)
(72) Inventeur: Bretey, Philippe, F-63400 Chamalieres (FR)
(74) Mandataire: Devaux, Edmond-Yves

(57) **Abrégé**

L'invention décrit un procédé qui permet de transformer un pneumatique (1) pour véhicule deux roues, habituellement monté avec une chambre à air sur une jante (2) non étanche à l'air, en un ensemble pneumatique dans lequel la pression de gonflage s'exerce directement sur la paroi interne dudit pneumatique (1). Elle concerne aussi le kit comportant les différents éléments nécessaires à la mise en oeuvre de ladite transformation.

## Description

La présente invention concerne le domaine des pneumatiques pour véhicules deux roues et plus particulièrement celui des pneumatiques habituellement montés avec une chambre à air sur des roues comportant des rayons.

Dans de tels pneumatiques, la pression de gonflage ne s'exerce pas directement sur la paroi interne dudit pneumatique mais par l'intermédiaire d'une chambre à air. A l'occasion de roulages sur des terrains accidentés comportant des objets agressifs, la chambre à air est fréquemment sujette à des crevaisons provoquant le plus souvent un démontage spontané du pneumatique de sa jante (déjantage), et ainsi une perte du contrôle de la direction du véhicule.

Les crevaisons de la chambre à air résultent de perforations qui sont le fait soit d'objets perforant à la fois le pneumatique et la chambre, soit d'un mécanisme dit de choc-pincement de la chambre à air. Dans ce deuxième cas, sous l'effet d'une surcharge dynamique, par exemple au passage d'un obstacle, la section méridienne du pneumatique et celle de la chambre à air sont violemment et fortement écrasées et pincées entre d'une part le sol ou l'obstacle et d'autre part les rebords de la jante : sous ce pincement, la chambre à air, soumise localement à des efforts importants, peut se déchirer, ce qui conduit alors à un dégonflement instantanné de ladite chambre et une mise à plat brutale.

Le but de la présente invention est de proposer une solution qui permette d'éliminer le risque de mise à plat brutale, adaptable à un pneumatique pour véhicule deux roues, sans rien changer au pneumatique et à la roue habituellement utilisés, ledit pneumatique et la roue sur laquelle il est monté étant de conception habituelle. Un autre but de cette invention est de permettre un roulage sans déjantage du pneumatique même en cas de crevaison par perforation dudit pneumatique.

L'objet de la présente invention est de proposer un procédé de transformation d'un ensemble composé d'un pneumatique, d'une chambre à air indépendante et d'une roue à rayons pour équiper un véhicule deux roues, ladite roue comportant une jante à deux rebords et au moins un trou pour le passage d'une valve, en un ensemble dans lequel l'air de gonflage du pneumatique est en contact direct avec la paroi interne dudit pneumatique, ledit pneumatique comportant des bourrelets destinés à venir en contact avec les rebords de ladite jante, comprenant les étapes suivantes :
a) on rend étanche à l'air le fond de la jante, à l'exception du ou des trou(s) de passage pour valve(s);
b) on met en place l'un des bourrelets du pneumatique entre les rebords de la jante;
c) on introduit dans le pneumatique une structure annulaire continue élastique et déformable, ladite structure ayant un volume inférieur au volume délimité par l'intérieur du pneumatique monté sur sa jante et par le fond de jante, et ladite structure une fois en place ayant un diamètre intérieur inférieur au diamètre extérieur des rebords de jante et une dimension axiale, vue en section radiale à l'état libre de toute contrainte, supérieure à la distance axiale entre les bourrelets du pneumatique monté sur la jante;
d) on met en place le deuxième bourrelet sur la jante, de telle façon que la structure annulaire soit située axialement entre les deux bourrelets du pneumatique et puisse ainsi écarter axialement lesdits bourrelets du pneumatique de façon à les plaquer contre les rebords de la jante;
e) on procède ensuite au gonflage du pneumatique jusqu'à la pression désirée en utilisant un moyen de gonflage prévu à cet effet.

Par état libre de toute contrainte, on entend l'état de la structure annulaire hors du pneumatique. Une structure est dite élastique et déformable quand elle peut se déformer sous l'action d'un effort et qu'elle est capable de reprendre sa forme initiale après la suppression dudit effort.

De manière préférentielle et afin de faciliter le montage du pneumatique, la structure annulaire continue est une structure gonflable comportant des moyens de gonflage, ladite structure occupant à l'état gonflé un volume inférieur au volume délimité par l'intérieur du pneumatique et par le fond de jante et ladite structure gonflée ayant un diamètre intérieur inférieur au diamètre extérieur des rebords de jante et une dimension axiale de section radiale, à l'état gonflé et libre de toute contrainte, supérieure à la distance axiale entre les bourrelets du pneumatique monté sur la jante. Cette structure annulaire gonflable est mise en place non gonflée à l'étape c) du procédé décrit précédemment, ledit procédé se poursuivant alors par les étapes suivantes :
- on met en place le deuxième bourrelet sur la jante, de telle façon que la structure annulaire gonflable soit située axialement entre les deux bourrelets du pneumatique;
- on gonfle la structure annulaire à une pression suffisante pour écarter axialement les bourrelets du pneumatique de façon à les mettre en contact avec les rebords de la jante;
- on procède enfin au gonflage du pneumatique jusqu'à la pression désirée.

Dès que le gonflage du pneumatique a été réalisé, il peut être envisagé de reprendre le gonflage de la structure annulaire gonflable jusqu'à une pression voisine ou même supérieure à la pression de gonflage dudit pneumatique, afin de plaquer plus fermement encore les bourrelets dudit pneumatique contre les rebords de la jante; ainsi, même en cas de diminution de pression ou de perte de pression de gonflage dans le pneumatique, il est possible d' éliminer le risque de déjantage, c'est-à-dire la séparation du pneumatique et de la jante au cours du roulage.

La présente invention a aussi pour but de proposer un kit de transformation d'un ensemble composé d'un pneumatique, destiné à être monté normalement avec une chambre à air indépendante sur une roue à rayons, ladite roue comportant une jante ayant deux rebords, pour véhicule deux roues, en un ensemble comportant le même pneumatique et la même jante et dans lequel l'air de gonflage du pneumatique est en contact direct avec la paroi interne dudit pneumatique, ledit pneumatique comportant des bourrelets destinés à venir en contact avec les rebords de ladite jante, ledit kit de transformation comprenant une structure annulaire élastique et déformable dont le diamètre intérieur de ladite structure, une fois en place, est inférieur au diamètre extérieur des rebords de jante et dont la dimension axiale maximale de la section radiale, à l'état libre de toute contrainte, est au moins légèrement supérieur à l'espace disponible axialement à l'intérieur des bourrelets montés sur la jante, et une valve permettant le gonflage du pneumatique.

La structure annulaire peut être réalisée, par exemple, en matériau de type mousse élastique de faible densité afin de permettre une diminution du poids de l'ensemble pneumatique monté sans chambre sur sa roue comparé au même ensemble avec chambre. La structure annulaire est de préférence continue afin de pouvoir plaquer les bourrelets du pneumatique contre les rebords de la jante et cela sur toute la circonférence desdits rebords.

D'autre part, il est aussi proposé un kit de transformation dans lequel la structure annulaire élastique et déformable est une structure annulaire gonflable comportant des moyens de gonflage de ladite structure indépendamment du gonflage du pneumatique, le diamètre intérieur de ladite structure gonflée, est inférieur au diamètre extérieur des rebords de jante et dont la dimension axiale maximale de la section radiale de ladite structure, à l'état gonflé et libre de toute contrainte, est au moins légèrement supérieur à l'espace disponible axialement à l'intérieur des bourrelets montés sur la jante.

Par état gonflé et libre de toute contrainte, on entend un état de la structure annulaire hors du pneumatique et soumise aux seuls efforts exercés par une pression interne de gonflage à l'intérieur de ladite structure.

Ledit kit de transformation peut en outre comporter, par exemple, un ruban étanche à l'air et destiné à être enroulé sur le fond de jante dans le sens circonférentiel, ou une bande continue élastique et étanche à l'air et destinée à recouvrir au moins la largeur du fond de jante, dans le but de réaliser l'étanchéité dudit fond de jante.

Les figures annexées à la présente description illustrent de façon non limitative deux variantes de la mise en oeuvre de l'invention et permettent d'en comprendre le principe et les avantages.

La figure 1 représente une coupe radiale d'un pneumatique, pour véhicule deux roues, monté sur une jante et transformé selon l'invention.

La figure 2 représente un mode de montage des moyens respectifs de gonflage du pneumatique et de la structure annulaire correspondant à la variante de la figure 1.

La figure 3 représente une deuxième variante conforme à l'invention comportant un support interne élastique.

La figure 4 représente, vue en section, un autre mode de réalisation d'une structure annulaire gonflable.

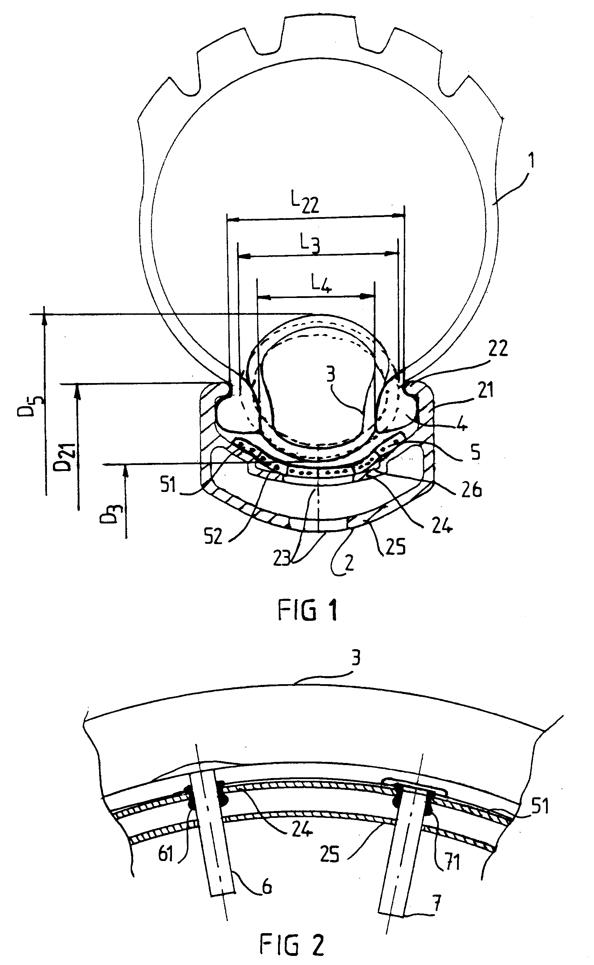

Sur la figure 1 est représenté un pneumatique 1 comportant deux bourrelets 4 prenant appui sur les rebords 21 d'une jante de montage 2 et sur leurs prolongements 22 situés radialement vers l'extérieur et axialement vers l'intérieur desdits rebords 21. La jante 2 comporte, sur son fond de jante 26 formé de deux cloisons 24 et 25, des trous 23 de passage et de fixation des rayons ainsi qu'un perçage pour le passage d'un moyen de gonflage du type valve.

Dans un premier mode de transformation, conforme à l'invention, du pneumatique 1 monté sur la jante 2, et comme représenté sur la figure 1, on procède tout d'abord à un deuxième perçage des cloisons 24 et 25 du fond de jante 26 afin de pouvoir faire passer la valve de gonflage 6 d'une structure annulaire gonflable 3 tel que schématisé sur la figure 2. Ensuite, on réalise l'étanchéité du fond de jante 26 en disposant sur ledit fond un moyen 5 étanche à l'air; cette opération peut être réalisée, par exemple, en enroulant sur la surface radialement à l'extérieur du fond de jante 26 sur un ou plusieurs tours, un ruban 51 étanche à l'air, de façon à réaliser l'étanchéité dudit fond de jante 26 en particulier au niveau des trous de fixation 23 des rayons de ladite jante. De manière préférentielle, ce ruban est renforcé dans la direction circonférentielle, par des fils textiles 52 dans le présent exemple, de façon à limiter la déformation dudit ruban au droit des trous de fixation des rayons et ainsi assurer une plus grande résistance à la déchirure dudit ruban.

Afin de mieux épouser la forme du fond de jante 26 et ainsi réaliser une meilleure étanchéité, il peut être souhaitable d'employer un ruban étanche à l'air qui possède la particularité d'être recouvert, sur sa face destinée à venir en contact avec ledit fond de jante, avec un matériau très déformable, qui de plus peut adhérer sur ledit fond.

Dans un autre mode de transformation selon l'invention, il est possible d'utiliser le seul trou pour valve de la jante, éventuellement après avoir agrandi son diamètre, pour y faire passer à la fois les moyens de gonflage du pneumatique 1 et ceux de la structure annulaire 3, en utilisant par exemple une valve unique comportant deux voies de gonflage indépendantes et reliées l'une au pneumatique 1 l'autre à la structure annulaire 3. Un tel exemple de valve à deux voies est décrit dans le brevet US 2 991 821.

Aux emplacements des valves de gonflage (ou à l'emplacement dans le cas d'une valve unique), le ruban 51 réalisant l'étanchéité est percé et le moyen de gonflage 7 du pneumatique 1 est mis en place comme représenté à la figure 2. Le maintien en place et l'étanchéité des moyens de gonflage 7 et 6 du pneumatique 1 et de la structure annulaire 3 sur le fond de jante 26 sont assurées par la compression d'un joint élastique 71 et 61 entourant la base desdits moyens, d'une manière connue en soi.

Après avoir monté le premier bourrelet du pneumatique 1 sur la jante 2, on procède à la mise en place de la structure annulaire 3, éventuellement en utilisant son élasticité de déformation, entre les rebords 21 de la jante 2 et de façon à faire passer le moyen de gonflage 6 de ladite structure 3 dans le trou prévu à cet effet sur le fond de jante 26. Enfin, le deuxième bourrelet est lui aussi mis en place sur la jante 2 d'une manière connue en soi.

Dans l'exemple décrit, la structure annulaire 3, positionnée axialement entre les bourrelets 4 du pneumatique 1, est réalisée dans une matière élastomérique élastique et étanche à l'air. Ladite structure 3 est telle qu'à l'état gonflé son diamètre intérieur D₃ est inférieur au diamètre extérieur D₂₁ des rebords 21 et telle que la dimension axiale maximale L₃ de sa section radiale à l'état gonflé et libre de toute contrainte, c'est-à-dire hors du pneumatique 1, est supérieur à l'espace L₄ disponible à l'intérieur des bourrelets montés sur la jante et dans le cas présent sensiblement égale à la distance axiale L₂₂ entre les prolongements 22 des rebords 21.

On procède alors au gonflage de la structure annulaire 3, jusqu'à une pression suffisante pour écarter les bourrelets 4 du pneumatique 1 et venir les mettre en contact au moins avec les prolongements 22 des rebords 21. Il est ensuite possible de gonfler le pneumatique 1 jusqu'à la pression désirée compte tenu du fait que l'étanchéité est réalisée au niveau du fond de jante 26 par le ruban étanche 51 et que les bourrelets 4 du pneumatique 1 sont plaqués contre les prolongements 22 des rebords 21 de la jante 2. La pression qui s'exerce dans la structure annulaire 3, suffisante pour venir faire l'étanchéité au niveau des rebords de jante, est faible cependant et ne peut empêcher le passage de l'air de gonflage du pneumatique 1 entre la paroi de ladite structure annulaire 3 et la paroi interne du pneumatique 1 aux endroits où elles sont en contact. Dans le cas où la paroi externe de la structure annulaire 3 et la paroi interne du pneumatique 1 sont trop lisses et pourraient ainsi créer une étanchéité au niveau de leur contact, rendant difficile le gonflage du pneumatique 1, il est alors nécessaire de réaliser quelques fines rayures sur lesdites parois, au moyen d'une râpe par exemple, dans le but de faciliter le passage de l'air de gonflage entre la structure annulaire 3 et ledit pneumatique 1.

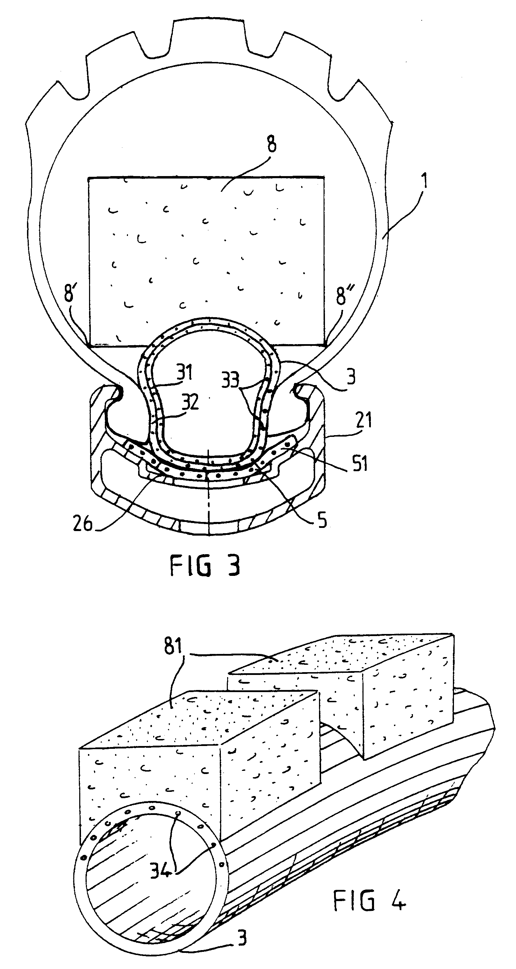

Afin de contrôler l'augmentation du diamètre extérieur D₅ de la structure annulaire gonflable 3 pendant son gonflage et permettre à cette structure de rester en place entre les bourrelets 4 du pneumatique 1, celle-ci peut comporter des moyens de limitation de la variation dudit diamètre D₅. Ces moyens peuvent être composés de fils de renfort textiles 34 disposés dans la direction circonférentielle et dans la partie de la section de la structure située le plus à l'extérieur radialement, comme cela est représenté sur la figure 4.

Dans le cas de l'enroulement d'un ruban 51 sur le fond de jante 26 et afin d'augmenter la tenue de l'étanchéité du fond de jante, en particulier avec le temps, il peut être souhaitable que la structure annulaire 3 soit dimensionnée de façon à exercer, une fois gonflée, des efforts de pression sur les différents tours de ruban, comme cela est représenté sur la figure 3. En exerçant des efforts de pression sur le ruban 51 recouvrant le fond de jante, la structure annulaire 3 plaque ledit ruban 51 contre le fond de jante 26 et empêche qu'il ne s'en écarte radialement. Une manière d'obtenir cet effet est d'employer une structure annulaire gonflable 3 composée par au moins deux couches superposées 31 et 32, chaque couche étant composée d'une matière élastomérique renforcée par des renforts textiles 33 disposés suivant un angle compris entre 25° et 50° mesuré à l'état non gonflé et par rapport à la direction circonférentielle, les renforts de chaque couche étant croisés par rapport aux renforts de la (des) couche(s) adjacente(s). Les angles sont mesurés selon les conventions habituelles utilisées dans le domaine du pneumatique. Lorsque cette structure annulaire 3 est gonflée son diamètre intérieur D₃ diminue, ce qui permet, sans moyen externe supplémentaire, une mise en place correcte de ladite structure entre les bourrelets du pneumatique pour réaliser le contact desdits bourrelets avec les rebords de jante 21. Un autre avantage lié à ladite structure annulaire est de pouvoir exercer des efforts de pression sur le ruban 51 disposé sur le fond de jante de façon à le maintenir en place.

On trouve des exemples de telles structures annulaires gonflables parmi les enveloppes appelés "boyaux".

Si dans cette configuration de la structure annulaire gonflable 3 s'appuyant sur le moyen 5 recouvrant le fond de jante 26 on prévoit que le diamètre extérieur D₅ de ladite structure est supérieur au diamètre D₂₁ des rebords 21, alors ladite structure 3 peut aussi servir de support interne au pneumatique 1 dans le cas d'une perte de la pression de gonflage dudit pneumatique 1.

Enfin, si l'on veut réduire encore le risque de perforation par choc-pincement du pneumatique 1 lui-même, on peut employer une structure annulaire gonflable 3 telle que représentée sur la figure 3 et caractérisée en ce que sur la partie radialement à l'extérieur de la paroi externe de ladite structure est disposé au moins un élément 8 en matériau déformable et élastique occupant en section méridienne une grande partie de l'espace laissé libre entre ladite structure annulaire gonflée 3 et le pneumatique 1 pour limiter la flèche d'écrasement dudit pneumatique 1 lorsque celui-ci est soumis à des chocs violents. De plus, en cas de crevaison du pneumatique 1, cette disposition permet d'assurer des conditions satisfaisantes de roulage en mode dégonflé, étant entendu que la structure annulaire 3 reste gonflée et maintient les bourrelets 4 dudit pneumatique 1 en place contre les rebords 21. Dans l'exemple présenté à la figure 3, sur la structure annulaire 3 est fixée par collage radialement à l'extérieur un anneau 8 continu en mousse élastique et de section quasiment rectangulaire de façon qu'une fois en place dans le pneumatique 1 ledit anneau 8 soit, par exemple, en contact par ses deux arêtes 8' et 8'' radialement à l'intérieur avec la surface intérieure du pneumatique 1.

La figure 4 montre une variante de la structure annulaire gonflable 3 réalisée en matière élastomérique et renforcée sur la moitié radialement à l'extérieur de sa section radiale par des fils de renfort textiles 34 orientés circonférentiellement de façon à limiter la variation du diamètre extérieur de ladite structure au cours du gonflage. D'autre part, cette structure annulaire 3 comporte, collés sur sa surface extérieure, des pavés de mousse élastique 81, formant des tronçons d'anneau, et destinés à servir de support élastique en cas de roulage sous-gonflé ou totalement dégonflé du pneumatique.

Le procédé de transformation, décrit dans le présent mémoire, permet d'obtenir d'une façon aisée un ensemble monté destiné à un véhicule deux roues et comprenant une jante à rayons et un pneumatique pourvu habituellement d'une chambre à air ne nécessitant pas de chambre à air pour gonfler ledit pneumatique et procurant audit ensemble une meilleure efficacité et une meilleure endurance vis-à-vis des roulages sur des terrains accidentés en diminuant les risques de perforations par choc-pincement, sans pour autant alourdir ledit ensemble par rapport au montage habituel avec chambre à air.

Un des domaines d'application de l'invention concerne aussi l'utilisation, dans le cadre de compétitions sportives, sur des vélos dits tous terrains pour lesquels la facilité de montage et l'efficacité pendant le temps de la course sont des paramètres particulièrement importants.

## Revendications

1. Procédé de transformation d'un ensemble composé d'un pneumatique d'une chambre à air indépendante et d'une roue à rayons pour équiper un véhicule deux roues, ladite roue comportant une jante à deux rebords et au moins un trou pour valve, en un ensemble dans lequel l'air de gonflage du pneumatique est en contact direct avec la paroi interne dudit pneumatique, ledit pneumatique comportant des bourrelets destinés à venir en contact avec des rebords de ladite jante, comprenant les étapes suivantes :
a) on rend étanche à l'air le fond de la jante, à l'exception du ou des trou(s) pour valve(s);
b) on met en place l'un des bourrelets du pneumatique entre les rebords de la jante;
c) on introduit dans le pneumatique une structure annulaire continue élastique et déformable, ladite structure ayant un volume inférieur au volume délimité par l'intérieur du pneumatique monté sur sa jante et par le fond de jante, et ladite structure une fois en place ayant un diamètre intérieur inférieur au diamètre extérieur des rebords de jante et une dimension axiale, vue en section radiale à l'état libre de toute contrainte, supérieure à la distance axiale entre les bourrelets du pneumatique monté sur la jante;
d) on met en place le deuxième bourrelet sur la jante, de telle façon que la structure annulaire soit située axialement entre les deux bourrelets du pneumatique et puisse ainsi écarter axialement lesdits bourrelets du pneumatique de façon à les plaquer contre les rebords de la jante;
e) on procède ensuite au gonflage du pneumatique jusqu'à la pression désirée en utilisant un moyen de gonflage prévu à cet effet.

2. Procédé selon la revendication 1 caractérisé en ce que la structure annulaire continue est une structure annulaire gonflable comportant un moyen de gonflage, ladite structure étant gonflée, après la mise en place du deuxième bourrelet du pneumatique, à une pression suffisante pour écarter axialement lesdits bourrelets et de façon à les plaquer contre les rebords de la jante, avant de procéder au gonflage du pneumatique jusqu'à la pression désirée.

3. Procédé selon la revendication 2 caractérisé en ce qu'après avoir gonflé le pneumatique à la pression désirée on procède à nouveau au gonflage de la structure annulaire gonflable jusqu'à une pression supérieure à la pression de gonflage du pneumatique.

4. Kit de transformation d'un ensemble composé d'un pneumatique (1) destiné à être monté avec une chambre à air indépendante sur une roue à rayons pour véhicule deux roues, ladite roue comportant une jante à deux rebords, en un ensemble dans lequel l'air de gonflage du pneumatique (1) est en contact direct avec la paroi interne dudit pneumatique, ledit pneumatique (1) comportant des bourrelets (4) destinés à venir en contact avec des rebords (21) de ladite jante (2), comprenant une structure annulaire (3) élastique et déformable dont le diamètre intérieur D₃ de ladite structure, une fois en place, est inférieur au diamètre extérieur D₂₁ des rebords (21) de la jante (2), et dont la dimension axiale L₃ de la section radiale est à l'état libre de toute contrainte, au moins légèrement supérieure à l'espace axial L₄ disponible à l'intérieur des bourrelets montés sur la jante, une valve (7) permettant le gonflage du pneumatique (1).

5. Kit de transformation selon la revendication 4 caractérisé en ce que la structure annulaire (3) est une structure gonflable comportant des moyens (6) permettant le gonflage de ladite structure indépendamment du gonflage du pneumatique (1), ladite structure (3) gonflée ayant un diamètre intérieur D₃ inférieur au diamètre extérieur D₂₁ des rebords (21) de la jante (2) et une dimension axiale L₃ de sa section radiale, à l'état gonflé et libre de toute contrainte, au moins légèrement supérieure à l'espace axial L₄ disponible à l'intérieur des bourrelets montés sur la jante.

6. Kit de transformation selon la revendication 5 caractérisé en ce qu'il comprend en outre des moyens (5) utilisés pour rendre étanche à l'air le fond de la jante (26), lesdits moyens (5) étant composés par un ruban (51) étanche à l'air et propre à être enroulé sur ledit fond de jante.

7. Kit de transformation selon la revendication 6 caractérisé en ce que le ruban (51) étanche à l'air est renforcé, par des fils textiles (52), dans le sens longitudinal dudit ruban (51).

8. Kit de transformation selon la revendication 7 caractérisé en ce que le ruban (51) étanche à l'air est recouvert, sur sa face destinée à venir en contact avec le fond de jante (26), avec un matériau très déformable, pouvant adhérer sur ledit fond.

9. Kit de transformation selon l'une des revendications 5 à 8 caractérisé en ce que la structure annulaire (3) comporte des moyens de limitation de la variation du diamètre extérieur D₅ de ladite structure (3) sous l'effet d'une pression de gonflage.

10. Kit de transformation selon la revendication 9 caractérisé en ce que les moyens de limitation de la variation du diamètre extérieur D₅ de la structure annulaire (3) sont composés de fils de renfort (34) disposés dans la direction circonférentielle et dans la partie de la section de la structure située le plus à l'extérieur radialement.

11. Kit de transformation selon l'une des revendications 6 à 8 caractérisé en ce que la structure annulaire (3) est dimensionnée pour, une fois mise en place et gonflée, exercer un effort de pression sur le moyen (5) assurant l'étanchéité du fond de jante (26) de façon à plaquer ledit moyen (5) sur ledit fond de jante (26).

12. Kit de transformation selon la revendication 11 caractérisé en ce que la structure annulaire (3) est composée par au moins deux couches superposées (31,32), chaque couche étant composée d'une matière élastomérique renforcée par des renforts textiles (33) disposés suivant un angle compris entre 25° et 50° mesuré par rapport à la direction circonférentielle à l'état non gonflé, les renforts de chaque couche étant croisés par rapport aux renforts de la (des) couche(s) adjacente(s).

13. Kit de transformation selon les revendications 5 à 12 caractérisé en ce que la structure annulaire (3) a, une fois en place et gonflée, un diamètre extérieur D₅ supérieur au diamètre extérieur D₂₁ des rebords (21) de la jante (2).

14. Kit de transformation selon l'une des revendications 5 à 13 caractérisé en ce que, sur la partie radialement à l'extérieur de la paroi externe de la structure annulaire (3) gonflable, est disposé au moins un élément (8, 81) en matériau déformable et élastique occupant en section méridienne une grande partie de l'espace laissé libre entre ladite structure annulaire (3) gonflable et le pneumatique (1) afin de limiter la flèche d'écrasement dudit pneumatique (1) lorsque celui-ci est dégonflé et soumis à une charge.

15. Kit de transformation selon la revendication 5 caractérisé en ce qu'il comprend en plus une bande continue élastique et étanche à l'air et destinée à recouvrir au moins la largeur du fond de jante.

16. Kit de transformation selon l'une des revendications 5 à 15 caractérisé en ce que les moyens de gonflage de la structure annulaire (3) gonflable et la valve du pneumatique (1) utilisent un seul et même trou pour valve sur la jante (2).

17. Kit de transformation selon la revendication 16 caractérisé en ce que les moyens de gonflage sont composés d'une valve unique à deux voies indépendantes pour le gonflage d'une part du pneumatique (1) et d'autre part de la structure annulaire (3) et ladite valve étant pourvue des moyens nécessaires pour réaliser l'étanchéité avec le fond de jante (26).
